# EUROPÄISCHE PATENTSCHRIFT

(11) **EP 4 429 902 B1**
(45) Veröffentlichungstag und Bekanntmachung des Hinweises auf die Patenterteilung: **05.11.2025**
(21) Anmeldenummer: 22777220.9
(22) Anmeldetag: 06.09.2022
(51) Int. Cl.: B60C 13/00, B29D 30/06, B29D 30/72

(54) **FAHRZEUGREIFEN**
VEHICLE TYRE
PNEUMATIQUE DE VÉHICULE

(30) Priorität: 08.11.2021 DE 102021212509
(43) Veröffentlichungstag der Anmeldung: 18.09.2024
(73) Patentinhaber: Continental Reifen Deutschland GmbH, 30175 Hannover (DE)
(72) Erfinder: RITTWEGER, Stefan, 30175 Hannover (DE); JURCO, Juraj, 30175 Hannover (DE)
(74) Vertreter: Continental Corporation
(86) Internationale Anmeldenummer: PCT/DE2022/200205
(87) Internationale Veröffentlichungsnummer: WO 2023/078511

(56) Entgegenhaltungen:
- EP-A1- 3 725 559
- WO-A1-2020/239307
- DE-A1- 102018 217 683
- JP-A- 2016 215 703
- JP-B2- 5 851 273

## Beschreibung

Die Erfindung betrifft einen Fahrzeugreifen mit Seitenwänden und einem Laufstreifen und mit zumindest einer Schraffurfläche auf zumindest einer der Seitenwände und/oder dem Laufstreifen, wobei die Schraffurfläche langgestreckt ausgebildete Schraffurrippen aufweist, die nebeneinander verlaufen und parallel oder weitgehend parallel zueinander verlaufende Längserstreckungsrichtungen aufweisen.

Fahrzeugreifen mit Oberflächenstrukturen sind in der DE 102018217683 A1, EP 3725559 A1, JP 2016215703 A, JP 5851273 B2 und der WO 2020239307 A1 offenbart.

Schraffurflächen werden üblicherweise im Zuge der Vulkanisation des Reifens mittels einer formgebenden Vulkanisationsform, welche auf einer Formfläche eine Negativkontur der betreffenden Schraffurfläche aufweist, außenseitig in den Reifen eingeprägt. Auf einem bereits vulkanisierten Reifen kann eine Schraffurfläche bzw. ein eine strukturierte Schraffurfläche bildendes Flächenelement durch Abtragung, mittels Gravur oder durch ein additives Verfahren hergestellt werden.

Auf Seitenwänden von Fahrzeugreifen ausgebildete Schraffurflächen haben vorrangig die Aufgabe, einen Kontrast zu vorhandenen glatten Flächenbereichen auf Seitenwänden, Schulterflanken des Reifens oder Rillenflanken von Rillen im Laufstreifen zu schaffen, wobei besonderes Augenmerk auf eine gute Sichtbarkeit und Erkennbarkeit gelegt wird, beispielsweise um auf den Seitenwänden befindliche Schriftzüge, bildliche Elemente, Firmenlogos, sonstige Kennzeichen und dergleichen optisch hervorzuheben. Dabei kann die Schraffurfläche Teil dieser Elemente sein oder diese ganz oder teilweise umgeben bzw. umlaufen Mit Schraffurflächen lassen sich auch konstruktionsbedingte Unebenheiten auf den Reifenseitenwänden kaschieren. Ausführungen von Schraffurflächen auf Seitenwänden mit nebeneinander verlaufenden Schraffurrippen sind beispielsweise aus der EP 2 502 758 A1 und der DE 10 2008 010 486 A1 bekannt.

Die Streuung von Licht an Flanken von Schraffurrippen verringert den Grad der Reflexion des Lichts an der Oberfläche des Reifens, wodurch die Helligkeitswirkung der Schraffurfläche verändert wird und die Schraffurfläche üblicherweise als dunkler erscheint als im Wesentlichen glatte, von Schraffurflächen freie Oberflächenbereiche. Insbesondere Schraffurflächen aus parallel zueinander verlaufenden Schraffurrippen lassen sich zwar sehr gut als Negativkonturen in eine Formfläche einer Vulkanisationsform zur formgebenden Vulkanisation des Fahrzeugreifens eingravieren, beispielsweise mittels Laser, und nachfolgend bei der Vulkanisation des Reifens qualitativ gut im Gummimaterial einprägen, aber ihre Kontrastwirkung ist stark abhängig von der Richtung des Lichteinfalls. Der Kontrast kann daher bei bestimmten Sichtwinkeln schlagartig nachlassen.

Der Erfindung liegt daher die Aufgabe zugrunde, die Kontrastwirkung von Schraffurflächen mit Schraffurrippen bei allen Lichtsituationen und Lichteinfallswinkeln gezielt zu beeinflussen, insbesondere zu erhöhen und dabei gleichzeitig einen guten Kompromiss zwischen einer verbesserten Kontrastwirkung und einer effektiven Produzierbarkeit - bezogen auf die Reifenvulkanisationsform - aufzufinden.

Diese Aufgabe wird durch einen Fahrzeugreifen gemäß Anspruch 1, eine Vulkanisationsform gemäß Anspruch 16 und ein Herstellungsverfahren gemäß Anspruch 17 erreicht.

Der Fahrzeugreifen gemäß der Erfindung ist dadurch gekennzeichnet, dass die Schraffurrippen zickzackförmig aufeinanderfolgende Rippenabschnitte aufweisen, die miteinander abwechselnd Inneneck- und Außeneckbereiche einschließen, wobei jeweils an derselben Seite der Schraffurrippen und von Inneneckbereichen aufgehend jeweils eine frei endende Zusatzrippe abzweigt, und wobei nebeneinander verlaufende Schraffurrippen bezüglich ihrer Längserstreckungsrichtungen gegeneinander derart versetzt sind, dass bei einander benachbarten Schraffurrippen jeweils die Außeneckbereiche und die Inneneckbereiche einander gegenüber liegen

Die gemäß der Erfindung zickzackförmig verlaufenden Schraffurrippen stellen gemeinsam mit den Zusatzrippen eine Vielzahl von in unterschiedlichen Richtungen verlaufende Rippenflanken zur Verfügung, an welchen von allen möglichen Richtungen einfallendes Licht auf eine Weise gestreut, mehrfach reflektiert und absorbiert wird, dass eine besonders hohe Kontrastwirkung erzielt wird. Unter allen Betrachtungswinkeln erscheinen daher die Schraffurflächen als besonders dunkel und kontrastreich. Zusätzlich treten Schatteneffekte auf, die besonders auf dem schwarzen Gummi des Fahrzeugreifens ein deutliches Hervorheben der Schraffurfläche unterstützen.

Eine besonders gute Kontrastwirkung durch eine besonders vorteilhafte Reflexion und Absorption von einfallendem Licht wird durch eine Anzahl von Maßnahmen unterstützt.

Gemäß einer dieser Maßnahmen zweigen die Zusatzrippen ausschließlich an Inneneckbereichen einer Seite und jeweils derselben Seite der Schraffurrippen und insbesondere an sämtlichen Inneneckbereichen dieser Seiten ab.

Bei einer weiteren diesbezüglich vorteilhaften Maßnahme verlaufen die Zusatzrippen parallel zueinander, insbesondere geradlinig und im rechten Winkel zur Längserstreckungsrichtung der Schraffurrippen.

Eine relativ kleine Dimensionierung der Schraffurrippen und ihrer Zusatzrippen sowie diverser Abstände tragen zu einer weiteren besonders deutlichen Kontrastwirkung bei. Diesbezüglich ist es etwa von Vorteil, wenn die Zusatzrippen eine Erstreckungslänge von 0,20 mm bis 0,50 mm, bevorzugt von 0,25 mm bis 0,40 mm, besonders bevorzugt von 0,25 mm bis 0,32 mm, aufweisen.

Bezüglich der erwähnten Dimensionierungen ist es vorteilhaft, wenn die einander zugewandten Außeneckbereiche benachbarter Schraffurrippen einen gegenseitigen lichten Abstand voneinander aufweisen, welcher 0,20 mm bis 0,40 mm beträgt und wenn ferner in den Außeneckbereichen benachbarter Schraffurrippen in horizontaler Richtung ein Abstand vorliegt, welcher mindestens 0,50 mm und insbesondere bis zu 0,80 mm beträgt. Die derart eng beabstandeten Schraffurrippen erlauben eine besonders gute Kontrastwirkung bei sämtlichen Sichtwinkeln.

In diesem Zusammenhang ist es zusätzlich von Vorteil, wenn die an den Inneneckbereichen aneinander anschließenden Rippenabschnitte miteinander jeweils einen Innenwinkel von 70° bis 120° einschließen, wobei vorzugsweise die Innenwinkel der Schraffurrippen einer Schraffurfläche übereinstimmend groß sind.

Auch die Erstreckungslänge der Rippenabschnitte trägt zu einer besonders vorteilhaften Lichtstreuung bei. Die Rippenabschnitte weisen jeweils eine Erstreckungslänge auf, die 0,20 mm bis 0,40 mm, insbesondere 0,25 mm bis 0,30 mm, beträgt, wobei vorzugsweise die Erstreckungslänge der Rippenabschnitte der Schraffurrippen einer Schraffurfläche jeweils übereinstimmend groß sind.

Es erleichtert die Ausgestaltung der Schraffurrippenstruktur in Formflächen von Vulkanisationsformen, wenn an Inneneckbereichen, von welchen keine Zusatzrippen ausgehen, Eckkanten ausgebildet sind und wenn die Außeneckbereiche bevorzugt abgeflachte bzw. abgerundete Eckbereiche sind.

Eine gewisse Selbstreinigung der Schraffurrippen auf den Reifenaußenflächen wird dadurch unterstützt, dass die Schraffurrippen und/oder die Zusatzrippen an ihren höchsten Stellen eine Höhe aufweisen, welche 0,10 mm bis 0,80 mm, bevorzugt 0,20 mm bis 0,50 mm, besonders bevorzugt 0,25 mm bis 0,35 mm, beträgt und wenn die Zusatzrippen bevorzugt eine Höhe aufweisen, welche zumindest an ihren Abzweigungsstellen mit der Höhe der Schraffurrippen übereinstimmt.

Im Zusammenhang mit dem Ausbilden der Negativstrukturen der Schraffurrippen ist es ferner von Vorteil, wenn die Schraffurrippen und/oder die Zusatzrippen an ihrer höchsten Stelle einen Spitzenbereich aufweisen, welcher entweder als schmales, 0,05 mm bis 0,10 mm breites, über die Erstreckungslänge der Rippenabschnitte bzw. Zusatzrippen verlaufendes Plateau oder als Rundung ausgebildet ist.

Eine weitere Ausgestaltung, welche eine die Kontrastwirkung hervorhebende Streuung bzw. Absorption von einfallendem Licht unterstützt, besteht darin, dass die Schraffurrippen und die Zusatzrippen seitliche Rippenflanken aufweisen, welche in Richtung eines Schraffurgrundes, auf welchem die Rippen ausgebildet sind, abfallen und jeweils zu einer Senkrechten auf den Schraffurgrund unter einem Winkel von bis zu 10°, insbesondere von 2° bis 10°, bevorzugt von 3° bis 5°, verlaufen.

Weitere Ausgestaltungen, die diesbezüglich vorteilhaft sind, bestehen darin, dass zumindest eine Schraffurrippe und/oder zumindest eine Zusatzrippe zumindest eine Rippenflanke aufweist, die konvex oder konkav gekrümmt ist oder einen konvex oder konkav gekrümmten Bereich aufweist und/oder gestuft oder strukturiert ausgebildet ist oder einen gestuften oder strukturierten Bereich besitzt.

Die erfindungsgemäße Vulkanisationsform zur formgebenden Vulkanisation des Fahrzeugreifens weist eine Formfläche auf, die eine Negativkontur einer Schraffurfläche mit langgestreckt ausgebildeten, nebeneinander verlaufenden Schraffurrippen aufweist und ist dadurch gekennzeichnet, dass die Negativkontur in Zickzack-Form verlaufende Vertiefungen zur Ausbildung von Schraffurrippen mit in Zickzack-Form aufeinanderfolgende Rippenabschnitten mit Außeneckbereichen und Inneneckbereichen und an den Inneneckbereichen weitere Vertiefungen zur Ausbildung von Zusatzrippen an jeweils den gleichen Seiten der Schraffurrippen aufweist, wobei die in Zickzack-Form verlaufenden Vertiefungen derart gegeneinander versetzt sind, dass jeweils ein Inneneckbereich einem Außeneckbereich der benachbarten Vertiefung gegenüber liegt.

Eine derart gestaltete Vulkanisationsform ermöglicht die zuverlässige Herstellung der Schraffurflächen auf einem Fahrzeugreifen. Die zugehörige Negativkontur lässt sich dabei zuverlässig mittels Lasergravur erzeugen und lässt sich im Zuge des Vulkanisationsprozesses auf der Reifenoberfläche qualitativ einwandfrei einprägen.

Das gemäß der Erfindung vorgesehene Verfahren zur Herstellung eines erfindungsgemäßen Fahrzeugreifens umfasst zumindest die folgenden Schritte:
a) Gravur einer Negativkontur einer Schraffurfläche in eine Formfläche einer Vulkanisationsform zur formgebenden Vulkanisation eines Fahrzeugreifens mittels Lasergravur, wobei die Negativkontur in Zickzack-Form verlaufende Vertiefungen zur Ausbildung von Schraffurrippen mit in Zickzack-Form aufeinanderfolgenden Rippenabschnitten mit Außeneckbereichen und Inneneckbereichen und an Inneneckbereichen weitere Vertiefungen zur Ausbildung von Zusatzrippen an jeweils den gleichen Seiten der Schraffurrippen aufweist,
   wobei die in Zickzack-Form verlaufenden Vertiefungen derart gegeneinander versetzt sind, dass jeweils ein Inneneckbereich einem Außeneckbereich der benachbarten Vertiefung gegenüberliegt
b) Bereitstellung eines Reifenrohlings und Positionieren des Reifenrohlings in der Vulkanisationsform,
c) formgebende Vulkanisation des Reifenrohlings mittels der Vulkanisationsform, wodurch eine Schraffurfläche mit Schraffurrippen und Zusatzrippen in eine

Außenfläche des Fahrzeugreifens, insbesondere eine Seitenwand und/oder den Laufstreifen des Fahrzeugreifens, eingeprägt wird.

Auch bezüglich des Verfahrens gilt, dass sich auf einem Fahrzeugreifen zumindest eine Schraffurfläche auf seiner Außenfläche besonders zuverlässig und exakt ausbilden lässt.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Ansicht eines Fahrzeugreifens mit Schraffurflächen,
Fig. 2 eine stark vergrößerte Draufsicht auf einen Ausschnitt einer Schraffurfläche,
Fig. 3 stark vergrößerte Schrägansichten von Längsabschnitten von zwei Schraffurrippen der Schaffurfläche und
Fig. 4a bis 4e Ausführungsvarianten von Querschnitten von Schraffurrippen.

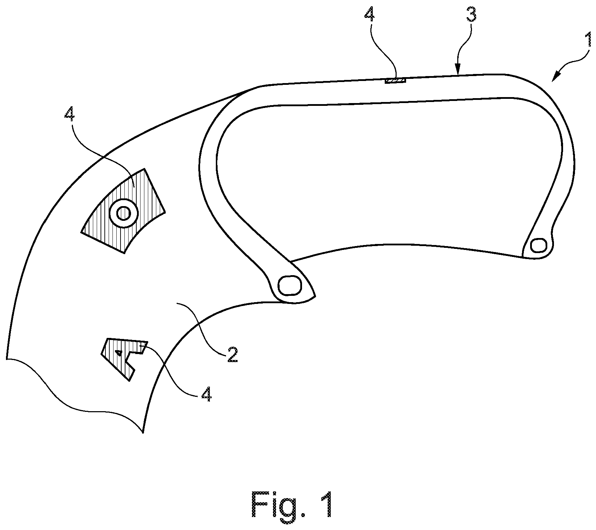

Fig. 1 zeigt schematisch einen Abschnitt eines Fahrzeugreifens 1 mit Seitenwänden 2, einem Laufstreifen 3 und Schraffurflächen 4 an der Außenseite der einen Seitenwand 2 und, angedeutet, am Laufstreifen 3. Bevorzugt ist der Fahrzeugreifen ein Fahrzeugluftreifen, insbesondere für Personenkraftwagen, Vans, SUVs, Light-Trucks, Nutzfahrzeuge, Krafträder, Busse oder Fahrräder. Schraffurflächen 4 sind bekannter Weise Flächenelemente, die in beliebiger äußerer Gestalt, beispielsweise als bildliche Ausgestaltung, als Logo oder als Schriftzeichen, ausgeführt sind. Schraffurflächen 4 können auch auf Rillenflanken und/oder Rillengründen von im Laufstreifen 3 ausgebildeten Rillen oder am Laufstreifenauslauf, also an den schulterseitig außerhalb der Bodenaufstandsfläche zu den Seitenwänden verlaufenden Schulterflanken, ausgebildet sein.

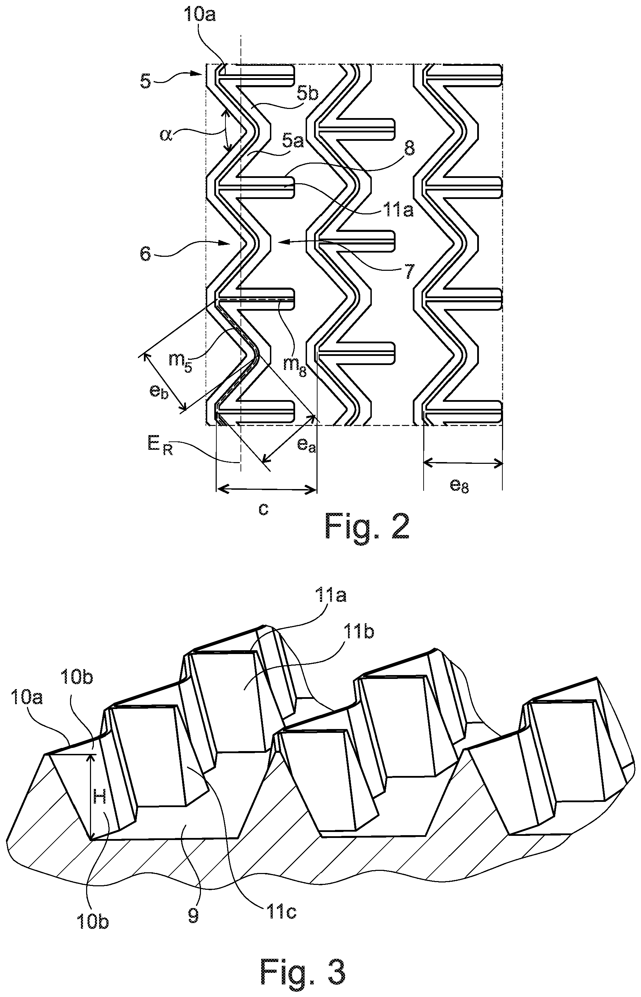

Wie Fig. 2 und Fig. 3 zeigen, weist die Schraffurfläche 4 langgestreckte und nebeneinander verlaufende Schraffurrippen 5 auf, die in Draufsicht in einer regelmäßigen Zickzackform verlaufen. Die Schraffurrippen 5 weisen eine Längserstreckungsrichtung E_{R} auf, die bei der gezeigten Ausführung eine Gerade ist, jedoch auch vorzugsweise insgesamt und geringfügig bogenförmig oder wellenförmig verlaufen kann. Wie insbesondere Fig. 2 zeigt, setzt sich jede Schraffurrippe 5 aus den Zickzack-Verlauf bildenden Rippenabschnitten 5a, 5b zusammen, die somit jeweils abwechselnd aufeinander folgen, wobei die Rippenabschnitte 5a und die Rippenabschnitte 5b jeweils parallel zueinander oder weitgehend parallel zueinander verlaufen. Entlang einer zentralen Mittellinie ms der Schraffurrippen 5 weisen die Rippenabschnitte 5a eine Erstreckungslänge eₐ, die Rippenabschnitte 5b eine Erstreckungslänge e_{b} auf, wobei die Erstreckungslängen eₐ und e_{b} jeweils untereinander bevorzugt gleich lang sind und 0,20 mm bis 0,40 mm, insbesondere 0,25 mm bis 0,30 mm, betragen.

Bedingt durch den Zickzack-Verlauf der Schraffurrippen 5 befinden sich zwischen den aufeinanderfolgenden Rippenabschnitten 5a, 5b Inneneckbereiche 6 und Außeneckbereiche 7. Die Rippenabschnitte 5a, 5b schließen an den Inneneckbereichen 6 miteinander jeweils einen Innenwinkel α von 70° bis 120° ein, bei ein und derselben Schraffurrippe 5 sind sämtliche Innenwinkel α bevorzugt gleich groß. Wie es Fig. 2 und Fig. 3 zeigen zweigt von jenen Inneneckbereichen 6, die sich an derselben Seite der Schraffurrippen 5 befinden, jeweils eine Zusatzrippe 8 ab. An Inneneckbereichen 6, an welchen keine Zusatzrippen 8 abzweigen, sind bevorzugt Eckkanten ausgebildet, die Außeneckbereiche 7 sind insbesondere abgeflachte bzw. gerundete Eckbereiche.

Sämtliche Zusatzrippen 8 einer Schaffurrippe 5 verlaufen parallel oder weitgehend parallel zueinander und weisen vorzugsweise übereinstimmende Erstreckungslängen es auf. Die von der Mittellinie ms der Schraffurrippe 5 ausgehende und entlang der zentralen Mittellinie ms der Zusatzrippe 8 ermittelte Erstreckungslänge es der Zusatzrippe 8 beträgt 0,20 mm bis 0,50 mm, bevorzugt 0,25 mm bis 0,40 mm, besonders bevorzugt 0,25 mm bis 0,32 mm.

Die innerhalb einer Schraffurfläche 4 nebeneinander verlaufenden Schraffurrippen 5 sind in ihrer Längserstreckungsrichtung E_{R} gegeneinander versetzt, derart, dass jeweils quer zur Längserstreckungsrichtung E_{R} betrachtet, ein Rippenabschnitt 5a aus der einen Schraffurrippe 5 neben einem Rippenabschnitt 5b aus der benachbarten Schraffurrippe 5 verläuft und dass die von den Inneneckbereichen 6 abzweigenden Zusatzrippen 8 jeweils in Richtung zu einem Inneneckbereich 6 der benachbarten Schraffurrippe 5 weisen. Der gegenseitige lichte Abstand zwischen den einander zugewandten Außeneckbereichen 7 benachbarter Schraffurrippen 5 beträgt 0,20 mm bis 0,40 mm. Der "horizontal" gemessene Abstand c (Fig. 2) zwischen den Mittellinien ms der Außeneckbereiche 7 benachbarter Schraffurrippen 5 beträgt mindestens 0,50 mm und insbesondere bis zu 0,80mm.

Die weitere Ausgestaltung einer bevorzugten Ausführungsform der Schraffurrippen 5 wird nun anhand der Fig. 3 näher erläutert. Die Schraffurrippen 5 befinden sich auf einem Schraffurgrund 9, welcher beispielsweise der Boden einer in der Seitenwand 2 des Reifens ausgebildeten flachen Vertiefung ist. Die Schraffurrippen 5 sind somit vom Schraffurgrund 9 ausgehende bzw. auf diesem ausgebildete Erhebungen, ihre Rippenabschnitte 5a, 5b weisen bei der in Fig. 2 gezeigten Ausführung einen im Wesentlichen dreieckigen oder dreieckähnlichen Querschnitt auf mit einem Spitzenbereich 10a und zwei in Richtung Schraffurgrund 9 abfallende Rippenflanken 10b auf, welche jeweils zu einer Senkrechten auf den Schraffurgrund 9 unter einem spitzen Winkel β von bis zu 10°, insbesondere von 2° bis 10°, bevorzugt von 3° bis 5°, verlaufen. Die senkrecht zum Schraffurgrund 9 ermittelte größte Höhe H der Schraffurrippen 5 beträgt 0,10 mm bis 0,80 mm, bevorzugt 0,20 mm bis 0,50 mm, besonders bevorzugt 0,25 mm bis 0,35 mm. Die Höhe H einer Schraffurrippe 5 kann auch die entlang der Längserstreckung dieser Schraffurrippe 5 gemittelte Höhe sein. Der erwähnte Spitzenbereich 10a der Schraffurrippen 5 kann als schmales, 0,05 mm bis 0,10 mm breites, durchgehend über sämtliche Rippenabschnitte 5a, 5b verlaufendes Plateau ausgebildet sein. Bei einer alternativen Ausführung ist der Spitzenbereich 10a eine Rundung zwischen den oberen Enden der Rippenflanken 10b.

Die von den Inneneckbereichen 6 ausgehenden bzw. abzweigenden Zusatzrippen 8 weisen bei der in Fig. 3 gezeigten Ausführungsvariante einen mit den Rippenabschnitten 5a, 5b übereinstimmenden dreieckigen Querschnitt auf, besitzen daher einen Spitzenbereich 11a und Rippenflanken 11b, die mit einer Senkrechten auf den Schraffurgrund 9 den erwähnten Winkel β einschließen. Die Höhe H der Zusatzrippen 8 entspricht der Höhe H der Schraffurrippen 5. An ihren freien Enden weisen die Zusatzrippen 8 eine Stirnflanke 11c auf, welche beim dargestellten Ausführungsbeispiel eine weitgehend ebene Fläche ist, die eine in Richtung Schraffurgrund 9 unter einem Winkel von bis zu 5°schräg abfallende Fläche ist oder senkrecht zum Schraffurgrund 9 und im Wesentlichen parallel zur Erstreckungsrichtung E_{R} verläuft. Bei einer alternativen, nicht gezeigten Ausführung, ist die Stirnflanke 11c insgesamt als Rundung zwischen den Rippenflanken 11b ausgebildet.

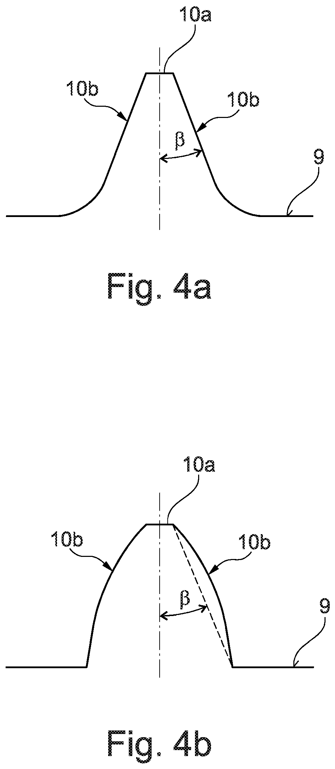

Die Figuren 4a bis 4e zeigen weitere Beispiele von Querschnitten der Schraffurrippen 5 bzw. ihrer Rippenabschnitte 5a, 5b und/oder ihrer Zusatzrippen 8. Beschrieben werden die unterschiedlichen Querschnittsformen anhand eines Rippenabschnittes 5a. Die dargestellten Querschnitte sind bezüglich einer Senkrechten auf den Schraffurgrund 9 symmetrisch gestaltet. Bei sämtlichen dargestellten Querschnittsbeispielen ist der Spitzenbereich 10a abgeflacht, daher mit einem schmalen Plateau versehen. Alternativ kann der Spitzenbereich gerundet ausgeführt sein und derart als eine Übergangsrundung zwischen den beiden Rippenflanken 10b ausgebildet sein.

Bei der in Fig. 4a gezeigten Ausführung verlaufen die Rippenflanken 10b unter dem bereits erwähnten Winkel β relativ zu einer Senkrechten auf den Schraffurgrund 9, gehen jedoch nicht über einen Knick sondern über eine Krümmung bzw. Rundung in den Schraffurgrund 9 über. Fig. 4b zeigt einen Querschnitt, bei welchem die Rippenflanken 10b insgesamt oder zumindest über den Großteil ihrer Erstreckung konvex gekrümmt verlaufen. Der Übergang zum Schraffurgrund 9 erfolgt jeweils über einen Knick. Der erwähnte Winkel β liegt zwischen einer die Endpunkte der Rippenflanken 10b verbindenden Geraden vor.

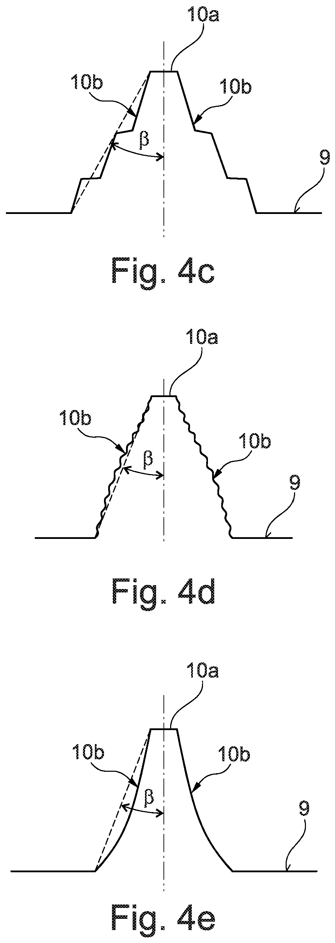

Fig. 4c zeigt eine Ausführung des Querschnittes mit gestuften Rippenflanken 10b. Ihr Neigungswinkel β liegt zwischen den beiden Enden der Rippenflanken 10 einer verbindenden Geraden vor.

Bei der in Fig. 4d gezeigten Ausführung sind die Rippenflanken 10d strukturiert, beispielsweise mit einer Rauheit, daher mit kleinsten Strukturen, versehen. Dabei können die Rippenflanken 10d insgesamt konvex gekrümmt oder im Wesentlichen als ebene strukturierte Flächen ausgebildet sein. Fig. 4e zeigt eine Ausführungsform, bei welcher die Rippenflanken 10d insgesamt oder über einen Teil ihrer Erstreckung konkav gekrümmt sind, jedoch über einen Knick an den Schraffurgrund 9 anschließen.

An der Oberfläche eines Fahrzeugreifens 1, etwa auf der Seitenwand 2, werden Schraffurflächen 4 durch eine formgebende Vulkanisation des Fahrzeugreifens hergestellt. Dazu weist die verwendete Vulkanisationsform eine Formfläche auf, die eine Negativkontur der zu schaffenden Schraffurflächen 4 enthält.

Die Herstellung des Fahrzeugreifens 1 umfasst insbesondere folgende Schritte:
a) Gravur einer Negativkontur einer Schraffurfläche 4 in eine Formfläche einer Vulkanisationsform zur formgebenden Vulkanisation eines Fahrzeugreifens 1 mittels Lasergravur, wobei die Negativkontur in Zickzack-Form verlaufende Vertiefungen zur Ausbildung von Schraffurrippen 5 mit in Zickzack-Form aufeinanderfolgenden Rippenabschnitten 5a, 5b mit Außeneckbereichen und Inneneckbereichen und an Inneneckbereichen weitere Vertiefungen zur Ausbildung von Zusatzrippen 8 an jeweils den gleichen Seiten der Schraffurrippen 5 aufweist,
   wobei die in Zickzack-Form verlaufenden Vertiefungen derart gegeneinander versetzt sind, dass jeweils ein Inneneckbereich einem Außeneckbereich der benachbarten Vertiefung gegenüberliegt
b) Bereitstellung eines Reifenrohlings und Positionieren des Reifenrohlings in der Vulkanisationsform,
c) formgebende Vulkanisation des Reifenrohlings mittels der Vulkanisationsform, wodurch eine Schraffurfläche 4 mit Schraffurrippen 5 und Zusatzrippen 8 in eine

Außenfläche des Fahrzeugreifens, insbesondere eine Seitenwand und/oder den Laufstreifen des Fahrzeugreifens, eingeprägt wird.

### Bezugszeichenliste

- 1: Fahrzeugreifen
- 2: Seitenwand
- 3: Laufstreifen
- 4: Schraffurfläche
- 5: Schraffurrippe
- 5a, 5b: Rippenabschnitt
- 6: Inneneckbereich
- 7: Außeneckbereich
- 8: Zusatzrippe
- 9: Schraffurgrund
- 10a: Spitzenbereich
- 10b: Rippenflanke
- 11a: Spitzenbereich
- 11b: Zusatzrippenflanke
- 11c: Stirnflanke
- eₐ, e_{b}, e₈: Erstreckungslänge
- E_{R}: Längserstreckungsrichtung
- H: Höhe
- ms, m₈: zentrale Mittellinie
- α, β: Winkel
- a: Abstand

## Patentansprüche

1. Fahrzeugreifen (1), insbesondere Fahrzeugluftreifen, mit Seitenwänden (2) und einem Laufstreifen (3) und mit zumindest einer Schraffurfläche (4) auf zumindest einer der Seitenwände (2) und/oder dem Laufstreifen (3), wobei die Schraffurfläche (4) langgestreckt ausgebildete Schraffurrippen (5) aufweist, die nebeneinander verlaufen und parallel oder weitgehend parallel zueinander verlaufende Längserstreckungsrichtungen (E_{R}) aufweisen,
**dadurch gekennzeichnet,**
**dass** die Schraffurrippen (5) zickzackförmig aufeinanderfolgende Rippenabschnitte (5a, 5b) aufweisen, die miteinander abwechselnd Inneneck- und Außeneckbereiche (6, 7) einschließen, wobei jeweils an derselben Seite der Schraffurrippen (5) und von Inneneckbereichen (6) aufgehend jeweils eine frei endende Zusatzrippe (8) abzweigt, und wobei nebeneinander verlaufende Schraffurrippen (5) bezüglich ihrer Längserstreckungsrichtungen (E_{R}) gegeneinander derart versetzt sind, dass bei einander benachbarten Schraffurrippen (5) jeweils die Außeneckbereiche (7) und die Inneneckbereiche (6) einander gegenüber liegen.

2. Fahrzeugreifen (1) nach Anspruch 1, **dadurch gekennzeichnet, dass** die Zusatzrippen (8) ausschließlich an Inneneckbereichen (6) einer Seite und jeweils derselben Seite der Schraffurrippen (5) und insbesondere an sämtlichen Inneneckbereichen (6) dieser Seiten abzweigen.

3. Fahrzeugreifen (1) nach Anspruch 1 oder 2, **dadurch gekennzeichnet, dass** die Zusatzrippen (8) parallel zueinander, insbesondere geradlinig und im rechten Winkel zur Längserstreckungsrichtung der Schraffurrippen (5) verlaufen.

4. Fahrzeugreifen nach zumindest einem der vorhergehenden Ansprüche, **dadurch gekennzeichnet, dass** die Zusatzrippen (8) eine Erstreckungslänge von 0,20 mm bis 0,50 mm, bevorzugt von 0,25 mm bis 0,40 mm, besonders bevorzugt von 0,25 mm bis 0,32 mm, aufweisen.

5. Fahrzeugreifen (1) nach zumindest einem der vorhergehenden Ansprüche, **dadurch gekennzeichnet, dass** die einander zugewandten Außeneckbereiche (7) benachbarter Schraffurrippen (5) einen gegenseitigen lichten Abstand (a) voneinander aufweisen, welcher 0,20 mm bis 0,40 mm beträgt.

6. Fahrzeugreifen (1) nach zumindest einem der vorhergehenden Ansprüche, **dadurch gekennzeichnet, dass** in den Außeneckbereichen (7) benachbarter Schraffurrippen (5) in horizontaler Richtung ein Abstand (c) vorliegt, welcher mindestens 0,50 mm und insbesondere bis zu 0,80 mm beträgt.

7. Fahrzeugreifen (1) nach zumindest einem der vorhergehenden Ansprüche, **dadurch gekennzeichnet, dass** die an den Inneneckbereichen (6) aneinander anschließenden Rippenabschnitte (5a, 5b) miteinander jeweils einen Innenwinkel (α) von 70° bis 120° einschließen, wobei vorzugsweise die Innenwinkel (α) der Schraffurrippen (5) einer Schraffurfläche (4) übereinstimmend groß sind.

8. Fahrzeugreifen (1) nach zumindest Anspruch 7, **dadurch gekennzeichnet, dass** die Rippenabschnitte (5a, 5b) jeweils eine Erstreckungslänge (eₐ, e_{b}) aufweisen, die 0,20 mm bis 0,40 mm, insbesondere 0,25 mm bis 0,30 mm, beträgt, wobei vorzugsweise die Erstreckungslängen (eₐ, e_{b}) der Rippenabschnitte (5a, 5b) der Schraffurrippen (5) einer Schraffurfläche (4) jeweils übereinstimmend groß sind.

9. Fahrzeugreifen (1) nach zumindest einem der vorhergehenden Ansprüche, **dadurch gekennzeichnet, dass** an Inneneckbereichen (6), von welchen keine Zusatzrippen (8) ausgehen, Eckkanten ausgebildet sind, wobei die Außeneckbereiche (7) bevorzugt abgeflachte bzw. abgerundete Eckbereiche sind.

10. Fahrzeugreifen (1) nach zumindest einem der vorhergehenden Ansprüche, **dadurch gekennzeichnet, dass** die Schraffurrippen (5) und/oder die Zusatzrippen (8) an ihrer höchsten Stelle eine Höhe (H) aufweisen, welche 0,10 mm bis 0,80 mm, bevorzugt 0,20 mm bis 0,50 mm, besonders bevorzugt 0,25 mm bis 0,35 mm, beträgt.

11. Fahrzeugreifen (1) nach zumindest einem der vorhergehenden Ansprüche, **dadurch gekennzeichnet, dass** die Zusatzrippen (8) eine Höhe (H) aufweisen, welche zumindest an ihren Abzweigungsstellen mit der Höhe (H) der Schraffurrippen (5) übereinstimmt.

12. Fahrzeugreifen (1) nach zumindest einem der vorhergehenden Ansprüche, **dadurch gekennzeichnet, dass** die Schraffurrippen (5) und/oder die Zusatzrippen (8) an ihrer höchsten Stelle einen Spitzenbereich (10a, 11a) aufweisen, welcher entweder als schmales, 0,05 mm bis 0,10 mm breites, über die Erstreckungslänge der Rippenabschnitte (5a, 5b) bzw. Zusatzrippen (8) verlaufendes Plateau oder als Rundung ausgebildet ist.

13. Fahrzeugreifen (1) nach zumindest einem der vorhergehenden Ansprüche, **dadurch gekennzeichnet, dass** die Schraffurrippen (5) und die Zusatzrippen (8) seitliche Rippenflanken (10b, 11b) aufweisen, welche in Richtung eines Schraffurgrundes (9), auf welchem die Rippen (5a, 5b, 8) ausgebildet sind, abfallen und jeweils zu einer Senkrechten auf den Schraffurgrund (9) unter einem Winkel (β) von bis zu 10°, insbesondere von 2° bis 10°, bevorzugt von 3° bis 5°, verlaufen.

14. Fahrzeugreifen (1) nach zumindest einem der vorhergehenden Ansprüche, **dadurch gekennzeichnet, dass** zumindest eine Schraffurrippe (5) und/oder zumindest eine Zusatzrippe (8) zumindest eine Rippenflanke (10b, 11b) aufweist, die konvex oder konkav gekrümmt ist oder einen konvex oder konkav gekrümmten Bereich aufweist.

15. Fahrzeugreifen (1) nach zumindest einem der vorhergehenden Ansprüche, **dadurch gekennzeichnet, dass** zumindest eine Schraffurrippe (5) der Schraffurfläche (4) und/oder zumindest eine Zusatzrippe (8) zumindest eine Rippenflanke (10b, 11b) aufweist, die gestuft oder strukturiert ausgebildet ist oder einen gestuften oder strukturierten Bereich aufweist.

16. Vulkanisationsform zur formgebenden Vulkanisation eines Fahrzeugreifens (1) gemäß einem der mehreren der vorhergehenden Ansprüche, wobei die Vulkanisationsform eine Formfläche aufweist, die eine Negativkontur einer Schraffurfläche (4) mit langgestreckt ausgebildeten, nebeneinander verlaufenden Schraffurrippen (5) aufweist,
**dadurch gekennzeichnet,**
**dass** die Negativkontur in Zickzack-Form verlaufende Vertiefungen zur Ausbildung von Schraffurrippen (5) mit in Zickzack-Form aufeinanderfolgenden Rippenabschnitten (5a, 5b) mit Außeneckbereichen und Inneneckbereichen und an Inneneckbereichen weitere Vertiefungen zur Ausbildung von Zusatzrippen (8) an jeweils den gleichen Seiten der Schraffurrippen (5) aufweist,
wobei die in Zickzack-Form verlaufenden Vertiefungen derart gegeneinander versetzt sind, dass jeweils ein Inneneckbereich einem Außeneckbereich der benachbarten Vertiefung gegenüberliegt.

17. Verfahren zur Herstellung eines Fahrzeugreifens (1) gemäß einem oder mehreren der Ansprüche 1 bis 14, wobei das Verfahren zumindest die folgenden Schritte umfasst:
a) Gravur einer Negativkontur einer Schraffurfläche (4) in eine Formfläche einer Vulkanisationsform zur formgebenden Vulkanisation eines Fahrzeugreifens (1) mittels Lasergravur, wobei die Negativkontur in Zickzack-Form verlaufende Vertiefungen zur Ausbildung von Schraffurrippen (5) mit in Zickzack-Form aufeinanderfolgenden Rippenabschnitten (5a, 5b) mit Außeneckbereichen und Inneneckbereichen und an Inneneckbereichen weitere Vertiefungen zur Ausbildung von Zusatzrippen (8) an jeweils den gleichen Seiten der Schraffurrippen (5) aufweist,
wobei die in Zickzack-Form verlaufenden Vertiefungen derart gegeneinander versetzt sind, dass jeweils ein Inneneckbereich einem Außeneckbereich der benachbarten Vertiefung gegenüberliegt
b) Bereitstellung eines Reifenrohlings und Positionieren des Reifenrohlings in der Vulkanisationsform,
c) formgebende Vulkanisation des Reifenrohlings mittels der Vulkanisationsform, wodurch eine Schraffurfläche (4) mit Schraffurrippen (5) und Zusatzrippen (8) in eine Außenfläche des Fahrzeugreifens, insbesondere eine Seitenwand und/oder den Laufstreifen des Fahrzeugreifens, eingeprägt wird.

## Claims

1. Vehicle tyre (1), in particular pneumatic vehicle tyre, having sidewalls (2) and a tread (3) and having at least one hatching area (4) on at least one of the sidewalls (2) and/or on the tread (3), wherein the hatching area (4) has elongate hatching ribs (5), which run next to one another and have directions of longitudinal extent (E_{R}) running parallel or largely parallel to one another,
**characterized in that**
the hatching ribs (5) have rib portions (5a, 5b) which follow one another in a zig-zag shape and together enclose alternately inner-corner and outer-corner regions (6, 7), wherein a freely ending additional rib (8) branches off respectively on the same side of the hatching ribs (5) and respectively extends up from inner-corner regions (6), and wherein hatching ribs (5) running next to one another are offset from one another with respect to their directions of longitudinal extent (E_{R}) in such a way that the outer-corner regions (7) and inner-corner regions (6) of adjacent hatching ribs (5) respectively lie opposite one another.

2. Vehicle tyre (1) according to Claim 1, **characterized in that** the additional ribs (8) branch off exclusively at inner-corner regions (6) of one side and respectively the same side of the hatching ribs (5) and in particular at all the inner-corner regions (6) of these sides.

3. Vehicle tyre (1) according to Claim 1 or 2, **characterized in that** the additional ribs (8) run parallel to one another, in particular in a straight line and at right angles to the direction of longitudinal extent of the hatching ribs (5).

4. Vehicle tyre according to at least one of the preceding claims, **characterized in that** the additional ribs (8) have a length of extent of 0.20 mm to 0.50 mm, preferably of 0.25 mm to 0.40 mm, particularly preferably of 0.25 mm to 0.32 mm.

5. Vehicle tyre (1) according to at least one of the preceding claims, **characterized in that** the mutually facing outer-corner regions (7) of adjacent hatching ribs (5) have a clear distance (a) of 0.20 mm to 0.40 mm from one another.

6. Vehicle tyre (1) according to at least one of the preceding claims, **characterized in that** there is a distance (c) of at least 0.50 mm and in particular up to 0.80 mm in the outer-corner regions (7) of adjacent hatching ribs (5) in the horizontal direction.

7. Vehicle tyre (1) according to at least one of the preceding claims, **characterized in that** the rib portions (5a, 5b) adjoining one another at the inner-corner regions (6) form a respective inner angle (α) of 70° to 120° with one another, wherein preferably the inner angles (α) of the hatching ribs (5) of a hatching area (4) are of equal magnitude.

8. Vehicle tyre (1) according to at least Claim 7, **characterized in that** the rib portions (5a, 5b) have a respective length of extent (eₐ, e_{b}) of 0.20 mm to 0.40 mm, in particular 0.25 mm to 0.30 mm, wherein preferably the lengths of extent (eₐ, e_{b}) of the rib portions (5a, 5b) of the hatching ribs (5) of a hatching area (4) respectively are of equal magnitude.

9. Vehicle tyre (1) according to at least one of the preceding claims, **characterized in that** corner edges are formed at inner-corner regions (6) from which no additional ribs (8) extend, wherein the outer-corner regions (7) are preferably flattened or rounded corner regions.

10. Vehicle tyre (1) according to at least one of the preceding claims, **characterized in that** the hatching ribs (5) and/or the additional ribs (8) have a height (H) of 0.10 mm to 0.80 mm, preferably 0.20 mm to 0.50 mm, particularly preferably 0.25 mm to 0.35 mm at their highest point.

11. Vehicle tyre (1) according to at least one of the preceding claims, **characterized in that** the additional ribs (8) have a height (H) which at least at their branching-off points is equal to the height (H) of the hatching ribs (5).

12. Vehicle tyre (1) according to at least one of the preceding claims, **characterized in that**, at their highest point, the hatching ribs (5) and/or the additional ribs (8) have a tip region (10a, 11a) which is in the form either of a narrow plateau, 0.05 mm to 0.10 mm wide, running over the length of extent of the rib portions (5a, 5b) or additional ribs (8), or of a rounding.

13. Vehicle tyre (1) according to at least one of the preceding claims, **characterized in that** the hatching ribs (5) and the additional ribs (8) have lateral rib flanks (10b, 11b), which slope in the direction of a hatching base (9) on which the ribs (5a, 5b, 8) are formed, and respectively run at an angle (β) of up to 10°, in particular of 2° to 10°, preferably of 3° to 5°, to a perpendicular to the hatching base (9).

14. Vehicle tyre (1) according to at least one of the preceding claims, **characterized in that** at least one hatching rib (5) and/or at least one additional rib (8) has at least one rib flank (10b, 11b) which is convexly or concavely curved or has a convexly or concavely curved region.

15. Vehicle tyre (1) according to at least one of the preceding claims, **characterized in that** at least one hatching rib (5) of the hatching area (4) and/or at least one additional rib (8) has at least one rib flank (10b, 11b), which has a stepped or structured form or has a stepped or structured region.

16. Vulcanizing mould for moulding vulcanization of a vehicle tyre (1) according to one or more of the preceding claims, wherein the vulcanizing mould has a mould surface which has a negative contour of a hatching area (4) with elongate hatching ribs (5) running next to one another,
**characterized in that**
the negative contour has depressions that run in a zig-zag shape for forming hatching ribs (5) having rib portions (5a, 5b) which follow one another in a zig-zag shape and have outer-corner regions and inner-corner regions, and, at inner-corner regions, has further depressions for forming additional ribs (8) on respectively the same sides of the hatching ribs (5),
wherein the depressions that run in a zig-zag shape are offset with respect to one another in such a way that respectively an inner-corner region lies opposite an outer-corner region of the adjacent depression.

17. Method for producing a vehicle tyre (1) according to one or more of Claims 1 to 14, wherein the method comprises at least the following steps:
a) engraving a negative contour of a hatching area (4) into a mould surface of a vulcanizing mould for moulding vulcanization of a vehicle tyre (1) by means of laser engraving, wherein the negative contour has depressions that run in a zig-zag shape for forming hatching ribs (5) having rib portions (5a, 5b) which follow one another in a zig-zag shape and have outer-corner regions and inner-corner regions, and, at inner-corner regions, has further depressions for forming additional ribs (8) on respectively the same sides of the hatching ribs (5),
wherein the depressions that run in a zig-zag shape are offset with respect to one another in such a way that respectively an inner-corner region lies opposite an outer-corner region of the adjacent depression,
b) providing a green tyre and positioning the green tyre in the vulcanizing mould,
c) performing moulding vulcanization of the green tyre by means of the vulcanization mould, as a result of which a hatching area (4) with hatching ribs (5) and additional ribs (8) is imprinted into an outer surface of the vehicle tyre, in particular a sidewall and/or the tread of the vehicle tyre.

## Revendications

1. Pneu de véhicule (1), en particulier pneumatique de véhicule, avec des parois latérales (2) et une bande de roulement (3) et avec au moins une surface hachurée (4) sur au moins une des parois latérales (2) et/ou sur la bande de roulement (3), la surface hachurée (4) comportant des nervures (5) de hachure de forme allongée, qui s'étendent côte à côte et présentent des directions d'extension longitudinale (E_{R}) s'étendant parallèlement ou dans une large mesure parallèlement les unes par rapport aux autres,
**caractérisé en ce**
**que** les nervures (5) de hachure comportent des sections (5a, 5b) de nervure successives en forme de zigzag, qui entourent des zones de coin intérieur et des zones de coin extérieur (6, 7) en alternance les unes avec les autres, une nervure supplémentaire (8) se terminant librement bifurquant respectivement sur le même côté des nervures (5) de hachure et en partant des zones de coin intérieur (6), et des nervures (5) de hachure s'étendant côte à côte étant décalées les unes à l'encontre des autres par rapport à leurs directions d'extension longitudinale (E_{R}) de telle manière que les zones de coin extérieur (7) et les zones de coin intérieur (6) se font face respectivement les unes les autres dans le cas de nervures (5) de hachure adjacentes.

2. Pneu de véhicule (1) selon la revendication 1, **caractérisé en ce que** les nervures supplémentaires (8) bifurquent exclusivement sur des zones de coin intérieur (6) d'un côté et respectivement du même côté des nervures (5) de hachure et en particulier sur l'ensemble des zones de coin intérieur (6) desdits côtés.

3. Pneu de véhicule (1) selon la revendication 1 ou 2, **caractérisé en ce que** les nervures supplémentaires (8) s'étendent parallèlement les unes par rapport aux autres, en particulier en ligne droite et à angle droit par rapport à la direction d'extension longitudinale des nervures (5) de hachure.

4. Pneu de véhicule selon au moins l'une des revendications précédentes, **caractérisé en ce que** les nervures supplémentaires (8) présentent une longueur d'extension de 0,20 mm à 0,50 mm, de manière préférée de 0,25 mm à 0,40 mm, de manière particulièrement préférée de 0,25 mm à 0,32 mm.

5. Pneu de véhicule (1) selon au moins l'une des revendications précédentes, **caractérisé en ce que** les zones de coin extérieur (7) tournées les unes vers les autres de nervures (5) de hachure adjacentes présentent un dégagement (a) mutuel les unes des autres, qui va de 0,20 mm à 0,40 mm.

6. Pneu de véhicule (1) selon au moins l'une des revendications précédentes, **caractérisé en ce qu'**est présente dans les zones de coin extérieur (7) de nervures (5) de hachure adjacentes, dans la direction horizontale, une distance (c) qui est égale au moins à 0,50 mm et qui va en particulier jusqu'à 0,80 mm.

7. Pneu de véhicule (1) selon au moins l'une des revendications précédentes, **caractérisé en ce que** les sections (5a, 5b) de nervure se raccordant aux zones de coin intérieur (6) forment les unes avec les autres respectivement un angle intérieur (α) de 70° à 120°, les angles intérieurs (α) des nervures (5) de hachure d'une surface hachurée (4) présentant une dimension concordante.

8. Pneu de véhicule (1) selon au moins la revendication 7, **caractérisé en ce que** les sections (5a, 5b) de nervure présentent chacune une longueur d'extension (eₐ, e_{b}), qui va de 0,20 mm à 0,40 mm, en particulier de 0,25 mm à 0,30 mm, les longueurs d'extension (eₐ, e_{b}) des sections (5a, 5b) de nervure des nervures (5) de hachure d'une surface hachurée (4) présentant de préférence chacune une dimension concordante.

9. Pneu de véhicule (1) selon au moins l'une des revendications précédentes, **caractérisé en ce que** des arêtes de coin sont réalisées sur des zones de coin intérieur (6), desquelles aucune nervure supplémentaire (8) ne part, les zones de coin extérieur (7) étant des zones de coin de manière préférée aplaties ou arrondies.

10. Pneu de véhicule (1) selon au moins l'une des revendications précédentes, **caractérisé en ce que** les nervures (5) de hachure et/ou les nervures supplémentaires (8) présentent sur leur point le plus haut une hauteur (H), qui va de 0,10 mm à 0,80 mm, de manière préférée de 0,20 mm à 0,50 mm, de manière particulièrement préférée de 0,25 mm à 0,35 mm.

11. Pneu de véhicule (1) selon au moins l'une des revendications précédentes, **caractérisé en ce que** les nervures supplémentaires (8) présentent une hauteur (H), qui concorde au moins sur leurs points de bifurcation avec la hauteur (H) des nervures (5) de hachure.

12. Pneu de véhicule (1) selon au moins l'une des revendications précédentes, **caractérisé en ce que** les nervures (5) de hachure et/ou les nervures supplémentaires (8) comportent sur leur point le plus haut une zone pointue (10a, 11a), qui est réalisée soit comme un plateau étroit, présentant une largeur de 0,05 mm à 0,10 mm, s'étendant sur la longueur d'extension des sections (5a, 5b) de nervures ou des nervures supplémentaires (8) soit comme un arrondi.

13. Pneu de véhicule (1) selon au moins l'une des revendications précédentes, **caractérisé en ce que** les nervures (5) de hachure et les nervures supplémentaires (8) comportent des flancs (10b, 11b) de nervure latéraux, qui sont descendants en direction d'une base de nervure (9), sur laquelle les nervures (5a, 5b, 8) sont réalisées, et s'étendent respectivement par rapport à une perpendiculaire sur la base (9) de hachure selon un angle (β) allant jusqu'à 10°, en particulier de 2° à 10°, de manière préférée de 3° à 5°.

14. Pneu de véhicule (1) selon au moins l'une des revendications précédentes, **caractérisé en ce qu'**au moins une nervure (5) de hachure et/ou au moins une nervure supplémentaire (8) comportent au moins un flanc (10b, 11b) de nervure, qui est incurvé de manière convexe ou concave ou comporte une zone à incurvation convexe ou concave.

15. Pneu de véhicule (1) selon au moins l'une des revendications précédentes, **caractérisé en ce qu'**au moins une nervure (5) de hachure de la surface hachurée (4) et/ou au moins une nervure supplémentaire (8) comportent au moins un flanc (10b, 11b) de nervure, qui présente une forme étagée ou structurée ou comporte une zone étagée ou structurée.

16. Moule de vulcanisation pour la mise en forme par vulcanisation d'un pneu de véhicule (1) selon une ou plusieurs des revendications précédentes, le moule de vulcanisation comportant une surface de moulage, qui comporte un contour négatif d'une surface hachurée (4) avec des nervures (5) de hachure de forme allongée s'étendant côte à côte,
**caractérisé en ce**
**que** le contour négatif comporte des renfoncements s'étendant en forme de zigzag destinés à réaliser des nervures (5) de hachure avec des sections (5a, 5b) de nervure successives en forme de zigzag avec des zones de coin extérieur et des zones de coin intérieur et d'autres renfoncements sur des zones de coin intérieur destinés à réaliser des nervures supplémentaires (8) sur respectivement les mêmes côtés des nervures (5) de hachure,
les renfoncements s'étendant en forme de zigzag étant décalés de telle manière les uns à l'encontre des autres que respectivement une zone de coin intérieur fait face à une zone de coin extérieur du renfoncement adjacent.

17. Procédé de fabrication d'un pneu de véhicule (1) selon l'une ou plusieurs des revendications 1 à 14, le procédé comprenant au moins les étapes suivantes :
a) gravure d'un contour négatif d'une surface hachurée (4) dans une surface de moulage d'un moule de vulcanisation pour la mise en forme par vulcanisation d'un pneu de véhicule (1) au moyen d'une gravure laser, le contour négatif comportant des renfoncements s'étendant en forme de zigzag destinés à réaliser des nervures (5) de hachure avec des sections (5a, 5b) de nervure successives en forme de zigzag avec des zones de coin extérieur et des zones de coin intérieur et d'autres renfoncements sur des zones de coin intérieur destinés à réaliser des nervures supplémentaires (8) sur respectivement les mêmes côtés des nervures (5) de hachure,
les renfoncements s'étendant en forme de zigzag étant décalés de telle manière les uns à l'encontre des autres que respectivement une zone de coin intérieur fait face à une zone de coin extérieur du renfoncement adjacent
b) fourniture d'une ébauche de pneu et positionnement de l'ébauche de pneu dans le moule de vulcanisation,
c) mise en forme par vulcanisation de l'ébauche de pneu au moyen du moule de vulcanisation, ce qui permet d'estamper une surface hachurée (4) avec des nervures (5) de hachure et des nervures supplémentaires (8) dans une surface extérieure du pneu de véhicule, en particulier une paroi latérale et/ou la bande de roulement du pneu de véhicule.
